# EUROPEAN PATENT SPECIFICATION

(11) **EP 2 305 462 B1**
(45) Date of publication and mention of the grant of the patent: **05.09.2012**
(21) Application number: 09165820.3
(22) Date of filing: 17.07.2009
(51) Int. Cl.: B32B 37/24, B32B 33/00, B27N 3/00, E04F 15/10, E04F 15/02, B44C 5/04

(54) **Method for manufacturing a panel and a panel**
Verfahren zur Herstellung einer Platte und Platte
Procédé de fabrication d'un panneau et panneau

(30) Priority: 17.06.2009 EP 09007916
(43) Date of publication of application: 06.04.2011
(73) Proprietor: Flooring Technologies Ltd., Pieta PTA 9044 (MT)
(72) Inventor:
(74) Representative: Morawski, Birgit

(56) References cited:
- WO-A1-2004/050359
- WO-A1-2007/042258
- WO-A2-2005/066431
- WO-A2-2009/065769
- DE-A1-102004 050 278
- US-A- 3 308 013

## Description

The disclosure generally relates to the field of fiber-based panels with wear resistant surfaces and a method for manufacturing the same. Such panels can be used e.g. as building or floor panels.

WO 2009 065 769A2 discloses a panel of this kind.

One issue with panels of this kind is the sensitivity to UV radiation. If a panel comprises a surface with e.g. wood fibers, the surface will change its color over time. In many cases the surface will become yellowish.

Therefore it is important to have panels with an improved light fastness.

One embodiment is a panel, comprising a surface layer on a substrate and a protective layer on said surface layer. The surface layer comprises a mixture of a) at least partially bleached cellulose fibers and b) at least one binder. The protective layer comprises c) wear resistant particles and aminoplasts.

As will be described below, the substrate can be a homogenous substrate, such a board, or it can comprise more than one layer, like a core and / or balancing layer. The surface layer is on the side of the substrate which is in use turned towards the light and / or environmental influences.

Such panels can e.g. used as flooring panels, wall panels, ceiling panels, facade panels, furniture panels, automotive parts, wet room panels or kitchen cutting boards.

One embodiment for manufacturing panels described above comprises the following steps:
a) Preparing a particulate mixture comprising cellulose fibers and at least one binder, wherein the cellulose fibers are at least partially bleached.
b) Applying the mixture on a substrate, preferably a large-area side of a substrate,
c) Applying pressure and temperature for forming a surface layer in a pre-press station,
d) Applying at least one printing pattern on the surface layer,
e) Applying a solution comprising wear resistant particles onto the printing pattern of step d) for forming a protective layer, wherein the protective layer is applied as an aqueous solution comprising wear resistant particles and aminoplasts. and
f) Applying further pressure and temperature in a press station.

The panel obtained by above manufacturing process is thus characterized by a surface layer having a structured surface and being covered by a protective layer for preventing abrasion.

The pressure applied in step c) is between 3 and 8 MPa and the temperature is between 150 °C and 250 °C. Under these conditions the binder is activated in the outer layers of the particulate mixture for obtaining a composite material by fusing substrate and the particulate mixture and to obtain a printable surface. One outer layer is located immediately on the substrate surface whereas another layer faces the pre-press station.

The substrate can comprise particle boards, HDF boards, gypsum boards, WPC (wood plastic composite) or OSB boards.

In one embodiment the surface layer may also comprise wood fibres and/or pigments, whereby white pigments are used for fair decors, beige pigments for darker decors or grey pigments for stone like decors.

The surface of the substrate is wetted, preferably with water, before applying the particulate mixture onto the substrate in step b) by scattering. In case the substrate and the scattered mixture are wetted it is necessary to apply heat, preferably by microwaves after applying the mixture to the substrate. The heating of the water located between the substrate and the particulate mixture allows for the production of firmer panels.

In step f) it is also possible to introduce further structures into the protective layer by using pressing plates in the press station having a structured surface. These structures can be adjusted to the previously applied patterns in step d) for providing decor synchronal structures (embossing in register).

Embodiments for above panels and a manufacturing process are described in connection with the drawing. In the drawings
- Fig. 1: shows part of a perspective view of a cross-section of a panel according to a first embodiment;
- Fig. 2: shows an example for an apparatus to manufacture panels.
- Fig. 3: shows an example for an apparatus to manufacture panels.

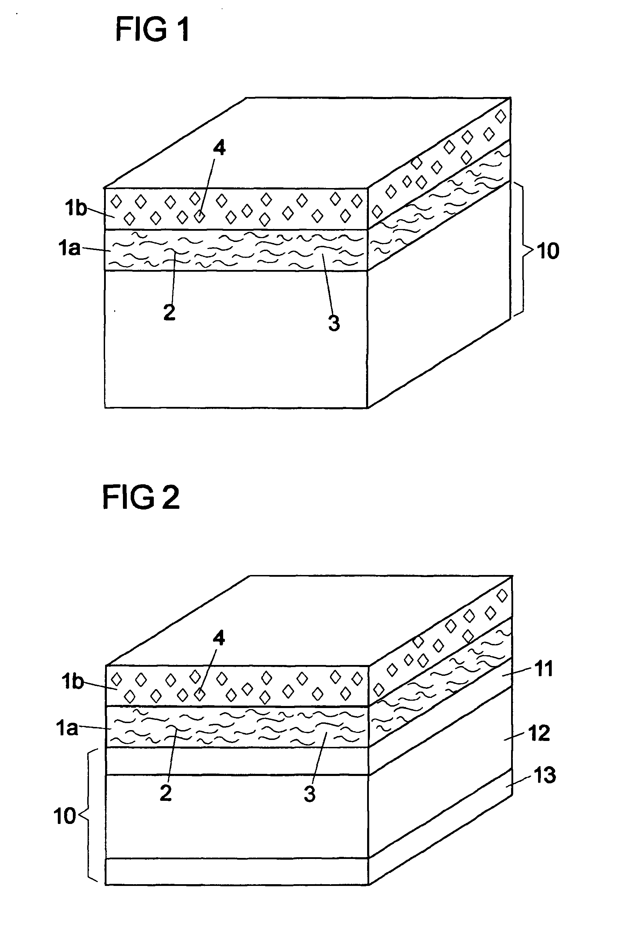

In Fig. 1 a perspective view of a cross-section of a panel which can e.g. be used as a flooring panel is shown. Flooring panels are subjected to light, e.g. through windows, so that the light fastness of flooring panels is one important factor.

The panel according to a preferred embodiment comprises three sections: A substrate 10 on which a surface layer 1a and a protective layer 1b are positioned.

The surface layer 1a is the one part which is especially important in respect to light fastness since it is the side of the panel which is exposed to light, when in use. As will be seen below, the surface layer 1 can comprise sublayers and does not have to be homogenous.

The substrate 10 can be one homogenous part, e.g. consisting of a board. In Fig. 2 a more complex structure of the substrate is shown.

Within the surface layer 1a at least two components are present which in combination bring the desired functionality of the surface layer 1a. The surface layer comprises at least partially bleached cellulose fibers 2 which can be derived from e.g. wood, cotton or hemp. The cellulose fibers 2 act as reinforcement material. The length of typical cellulose fibers can be between 1 and 5 mm.

The cellulose fibers 2 have the feature of being light fast, especially light faster than wood fibers. Therefore a surface layer 1a comprising cellulose does not become discolored (e.g. yellow) under irradiation with UV light, such as it is normally present in sunlight.

The cellulose fibers 2 are at least partially bleached. The bleaching, e.g. which NaOH, reduces the concentration of components (e.g. lignin, hemicelluloses) which can give especially rise to discoloring.

One possible embodiment comprises at least partially bleached cellulose fibers 2 having a white grade measured according to Berger of more than 80.

But the panel described herein is not only bright but also resistant against discoloring. One embodiment is panel having a light fastness according to grey wool scale EN 20 105 of the surface layer 1a with a level higher than 2.

Furthermore the surface layer 1a comprises a binder 3. The binder 3 holds the different components of the surface layer 1 together.

Possible binders 3 are e.g. melamine resins, acrylic resins and / or polyurethane resins, i.e. mixtures of these resins are also suitable as binders 3. These binders 3 provide sufficient resilience against environmental impacts.

As a further component the surface layer 1a might comprise an additive. If color is to be applied to the panel, this can be achieved by including suitable pigments into the surface layer 1a.

The protective layer 1b comprising the wear resistant particles 4 is arranged on the surface layer 1a.

Suitable wear resistant particles 4 are aluminum oxides, silicon carbides, silicon oxides and / or micro glass bubbles. These particles are resilient and sufficiently color neutral.

In Fig. 2 a substrate 10 with three layers 11, 12, 13 is shown. On the front side, i.e. the side exposed to light or other environmental effects, the surface layer 1a and the protective layer 1b are positioned. The surface layer 1a and the protective layer 1b can have the properties according to at least of one of the embodiments described above.

One layer in the substrate 10 is core 11 which is positioned underneath the surface layer 1a. One purpose of the core 11 is to provide some resilience in case the surface layer 1a is structured e.g. by pressing with a tool (not shown) into the surface layer 1. The core 11 can comprise wood fibers, cellulose fibers, hemp fibers, cotton fibers and / or plastic fibers. Since the purpose of the core 11 is primarily not the stability of the overall panel, but the resilience, less costly components, like wood fibers can be used here in higher concentrations. Other possible components of the core 11 can be a binder (such as the resins mentioned above), bleached cellulose, unbleached cellulose, bleached ground wood, unbleached ground wood and / or pigments.

Structuring the surface layer 1a and the core 11 can result in a surfaces e.g. with a stone-like structure or a tile-like structure. Together with suitable pigments the panel can have the appearance of stone or tiles. Another possibility structure the surface layer 1a is an analogue or digital printing process, applying e.g. a decorative print.

In Fig. 2 a board 12 is positioned underneath the core 11. The board 12 primary purpose is to give stability to the panel.

Suitable materials for boards can be e.g. particle boards, HDF boards, gypsum boards, WPC (wood plastic composite) or OSB boards. Naturally it is possible to combine more than one kind of board to obtain a multilayered board 12.

As shown in Fig. 2 it is possible to position a balancing paper 13 underneath the board 12.

The above described flooring panel is just one embodiment of the panels described herein. Other uses of such panels are wall panels, ceiling panels, facade panels, furniture panels, automotive parts, wet room panels or kitchen cutting boards.

The thickness of the surface layer 1a can vary between 0,05 and 0,3 mm. The thickness of the core 11 can vary between 0.05 and 1 mm.

All these panels would benefit from the surface layer 1a using cellulose fibers and at least one binder and from a protective layer 1b using wear-resistant particles.

In the following an embodiment of a method for manufacturing panels is described.

The components of the surface layer 1a, i.e. the at least partially bleached cellulose fibers 2 and the at least one binder 3 are mixed until the form an essentially homogenous particulate mass. This mixture is then applied to the surface of the substrate 10. After this application pressure and temperature are applied to the surface to cure the mixture and to fasten the surface layer 1a to the substrate 10.

Suitable process conditions are pressures between 3 and 8 MPa and temperatures in the range between 150 and 200 °C.

The components of the surface layer 1a can be applied in different ways to the form the surface layer 1a depending on the circumstances of the process, e.g. if a printing process is present or not, preferably by scattering.

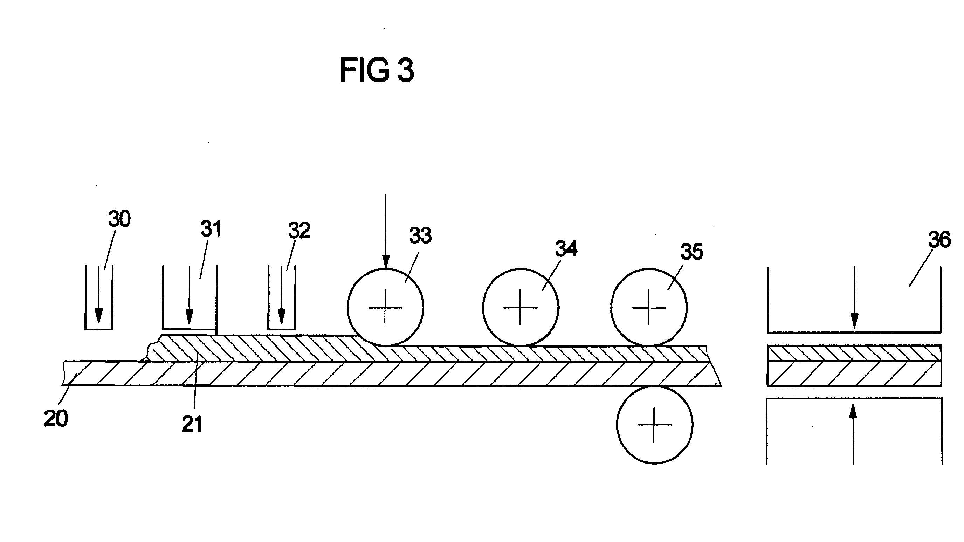

In connection with Fig. 3 a preferred embodiment of a method to manufacture panels are discussed.

Here two layers 20, 21 are processed in the apparatus in various stages. The panels can be cut from those layers 20, 21. The upper layer 21 can e.g. comprise the surface layer 1a and protective layer 1b, and the lower layer 20 can comprise the core 11, the board 12 and / or the balancing layer 13. The thickness of the layer indicated in Fig. 3 is not representative for the real thickness.

In a scatter station 31 components contained in the surface layer can be scattered onto the lower layer 20. In one embodiment of the method, melamine resin powder or particles are scattered onto the lower layer 20 with cellulose fibers 2. The scattering station 31 can comprise different tanks so that the components to be scattered do not have to be stored in one tank. Further optionally pigments can be scattered onto the lower layer 20 at this stage together with the cellulose fibers and the resin.

In Fig. 3 is shown that the components scattered onto the lower layer 20 forms the upper layer.

In a subsequent heating station 32 some sort of heating is applied to the layers 20, 21. The heating station 32 can e.g. comprise an infrared source and / or a microwave source. This is preferably done in case of a wetted substrate.

In a prepress station 33 pressure and elevated temperatures are applied to the upper layer 21. This leads to a prepreg with an increased density.

In first rolling station 34 some printing patterns are applied onto the upper layer 21. Printing can be applied by digital or analogue means. The purpose of the printing can be to apply some decorative motives or structures to the upper layer 21, e.g. the surface layer (1a).

In a second rolling station 35 the protective layer 1b with wear resistant particles 4 is applied directly to the upper layer 21, in particular to the surface layer 1a.

For forming the protective layer 1b the wear resistance particles 4 are applied onto the upper layer 21 in form of an aqueous solution. The solution comprises aminoplasts.

A lower roll can apply a balancing layer 13 to the lower side of the lower layer 20. The applied layers are dried by hot air or infrared radiation.

In a pressing station 36 further pressure and elevated temperature is applied to fuse the different layers together. This leads to a curing of the components. Typical operating conditions are pressures in the range 3 to 8 MPa and 150 to 250 °C.

The stages shown in Fig. 3 are here only described schematically. Each of the stages might comprise more than one apparatus.

In course of the manufacturing process it is also possible to obtain pre-pregs. The pre-pregs are manufacturable by a)forming a surface layer comprising cellulose fibers and at least one binder on a substrate, and subsequently b) applying elevated pressure and temperatures to the surface layer in prepress station.

## Claims

1. Method for manufacturing a panel comprising the steps of
a) Preparing a particulate mixture comprising cellulose fibers (2) and at least one binder (3), wherein the cellulose fibers (2) are at least partially bleached,
b) Applying the mixture on a substrate (10),
c) Applying pressure and temperature for forming a surface layer (1a) in a pre-press station (33),
d) Applying at least one printing pattern on the surface layer (1a),
e) Applying a solution comprising wear resistant particles (4) onto the printing pattern of step d) for forming a protective layer (1b), wherein the protective layer (1b) is applied as an aqueous solution comprising wear resistance particles (4) and aminoplasts, and
f) Applying further pressure and temperature in a press station (36).

2. Method according to claim 1, wherein the pressure in step c) is between 3 and 8 MPa and the temperature is between 150 °C and 250 °C.

3. Method according to claim 1 or 2, wherein the at least partially bleached cellulose fibres (2) have a white grade measured according to Berhger of more than 80.

4. Method according to at least one of the preceding claims, wherein the light fastness according to grey wool scale EN 20 105 of the surface layer (1a) is higher than 2.

5. method according to one of the preceding claims, wherein the substrate (10) comprises particle boards, HDF boards, gypsum boards, WPC (wood plastic composite) or OSB boards.

6. Method according to one of the preceding claims, wherein the surface layer comprises wood fibres and/or pigments.

7. Method according to one of the preceding claims, wherein the binder (3) comprises melamine resin, acrylate resin and / or polyurethane resin.

8. Method according to at least one of the preceding claims, wherein the wear resistant particles (4) are at least one of the following: aluminum oxides, silicon carbides, silicon oxide, micro glass bubbles.

9. Method according to one of the preceding claims, wherein the surface of the substrate (10) is wetted, preferably with water, before scattering the particulate mixture onto the substrate in step b).

10. Method according to claim 9, wherein the substrate and the scattered mixture are heated, preferably by microwaves after applying the mixture to the substrate.

11. Panel obtainable by a method according to one of the preceding claims comprising
- a surface layer (1a) comprising at least partially bleached cellulose fibers (2) and at least one binder (3), and
- a protective layer (1b) comprising wear resistant particles (4).

12. Panel according to claim 11, wherein the substrate (10) comprises a core (11) with at least one of the following: wood fibers, cellulose fibers, hemp fibers, cotton fibers, plastic fibers, a binder, bleached cellulose, unbleached cellulose, bleached ground wood, unbleached ground wood and/or pigments.

13. Panel according to claim 11 or 12, with at least one locking system (20) for combining the panel with at least another panel.

## Patentansprüche

1. Verfahren zum Herstellen eines Paneels, umfassend die Schritte:
a) Herstellen eines partikulären Gemischs, umfassend Cellulosefasern (2) und wenigstens ein Bindemittel (3), wobei die Cellulosefasern (2) wenigstens teilweise gebleicht sind,
b) Aufbringen des Gemischs auf ein Substrat (10),
c) Anwenden von Druck und Temperatur in einer Vorpress-Station (33), um eine Oberflächenschicht (la) zu bilden,
d) Aufbringen von wenigstens einer Druckstruktur auf die Oberflächenschicht (la),
e) Aufbringen einer Lösung, umfassend verschleißfeste Partikel (4), auf die Druckstruktur von Schritt d), um eine Schutzschicht (1b) zu bilden, wobei die Schutzschicht (1b) als wässrige Lösung aufgebracht wird, die verschleißfeste Partikel (4) und Aminoplaste umfasst, und
f) Anwenden von weiterem Druck und weiterer Temperatur in einer Press-Station (36).

2. Verfahren gemäß Anspruch 1, wobei der Druck bei Schritt c) zwischen 3 und 8 MPa beträgt und die Temperatur zwischen 150 °C und 250 °C beträgt.

3. Verfahren gemäß Anspruch 1 oder 2, wobei die wenigstens teilweise gebleichten Cellulosefasern (2) einen Weißegrad, gemessen gemäß Berger, von mehr als 80 aufweisen.

4. Verfahren gemäß wenigstens einem der vorstehenden Ansprüche, wobei die Lichtechtheit gemäß der Wolle-Grauskala EN 20 105 der Oberflächenschicht (la) höher als 2 ist.

5. Verfahren gemäß einem der vorstehenden Ansprüche, wobei das Substrat (10) Partikelplatten, HDF-Platten, Gipsplatten, WPC- (Holz-Kunststoff-Verbundstoff) oder OSB-Platten umfasst.

6. Verfahren gemäß einem der vorstehenden Ansprüche, wobei die Oberflächenschicht Holzfasern und/oder Pigmente umfasst.

7. Verfahren gemäß einem der vorstehenden Ansprüche, wobei das Bindemittel (3) Melaminharz, Acrylatharz und/oder Polyurethanharz umfasst.

8. Verfahren gemäß wenigstens einem der vorstehenden Ansprüche, wobei die verschleißfesten Partikel (4) wenigstens eines von folgendem sind:
Aluminiumoxide, Siliciumcarbide, Siliciumoxid, Mikrograsbläschen.

9. Verfahren gemäß einem der vorstehenden Ansprüche, wobei die Oberfläche des Substrats (10) benetzt wird, vorzugsweise mit Wasser, bevor das partikuläre Gemisch bei Schritt b) auf das Substrat gestreut wird.

10. Verfahren gemäß Anspruch 9, wobei das Substrat und das ausgestreute Gemisch nach dem Aufbringen des Gemischs auf das Substrat erhitzt werden, vorzugsweise durch Mikrowellen.

11. Paneel, erhältlich durch ein Verfahren gemäß einem der vorstehenden Ansprüche, umfassend
- eine Oberflächenschicht (1a), umfassend wenigstens teilweise gebleichte Cellulosefasern (2) und wenigstens ein Bindemittel (3), und
- eine Schutzschicht (1b), umfassend verschleißfeste Partikel (4).

12. Paneel gemäß Anspruch 11, wobei das Substrat (10) einen Kern (11) mit wenigstens einem von folgendem umfasst: Holzfasern, Cellulosefasern, Hanffasern, Baumwollfasern, Kunststofffasern, ein Bindemittel, gebleichte Cellulose, nichtgebleichte Cellulose, gebleichtes gemahlenes Holz, nichtgebleichtes gemahlenes Holz und/oder Pigmente.

13. Paneel gemäß Anspruch 11 oder 12 mit wenigstens einem Verriegelungssystem (20) zum Kombinieren des Paneels mit wenigstens einem weiteren Paneel.

## Revendications

1. Procédé de fabrication d'un panneau, comprenant les étapes qui consistent à :
a) préparer un mélange particulaire comprenant des fibres de cellulose (2) et au moins un liant (3), les fibres de cellulose (2) étant au moins partiellement blanchies,
b) appliquer le mélange sur un substrat (10),
c) appliquer une pression et une température pour former une couche de surface (la) dans une station de pré-pressage (33),
d) appliquer au moins un motif d'impression sur la couche de surface (la),
e) appliquer une solution comprenant des particules résistantes à l'usure (4) sur le motif d'impression de l'étape d) pour former une couche protectrice (1b), la couche protectrice (1b) étant appliquée sous la forme d'une solution aqueuse comprenant des particules résistantes à l'usure (4) et des aminoplastes, et
f) appliquer une pression et une température supplémentaires dans une station de pressage (36).

2. Procédé selon la revendication 1, dans lequel la pression dans l'étape c) est de 3 à 8 MPa et la température est de 150 °C à 250 °C.

3. Procédé selon la revendication 1 ou 2, dans lequel les fibres de cellulose au moins partiellement blanchies (2) ont un niveau de blanc mesuré selon Berger qui est supérieur à 80.

4. Procédé selon au moins l'une des revendications précédentes, dans lequel la solidité à la lumière de la couche de surface (la), selon l'échelle de laine grise EN 20 105, est supérieure à 2.

5. Procédé selon l'une des revendications précédentes, dans lequel le substrat (10) comprend les panneaux de particules, les panneaux de fibres de haute densité, les plaques de plâtre, les composites de bois et de plastique, ou les panneaux de particules orientées.

6. Procédé selon l'une des revendications précédentes, dans lequel la couche de surface comprend des fibres de bois et/ou des pigments.

7. Procédé selon l'une des revendications précédentes, dans lequel le liant (3) comprend une résine de mélamine, une résine acrylate, et/ou une résine de polyuréthane.

8. Procédé selon au moins l'une des revendications précédentes, dans lequel les particules résistantes à l'usure (4) sont constituées d'au moins l'un des éléments suivants : les oxydes d'aluminium, les carbures de silicium, l'oxyde de silicium, et les microsphères creuses en verre.

9. Procédé selon l'une des revendications précédentes, dans lequel la surface du substrat (10) est mouillée, préférablement avec de l'eau, avant l'étalement du mélange particulaire sur le substrat dans l'étape b).

10. Procédé selon la revendication 9, dans lequel le substrat et le mélange étalé sont chauffés, préférablement par micro-ondes, après l'application du mélange sur le substrat.

11. Panneau pouvant être obtenu par un procédé selon l'une des revendications précédentes, comprenant :
- une couche de surface (la) comprenant des fibres de cellulose au moins partiellement blanchies (2) et au moins un liant (3), et
- une couche protectrice (1b) comprenant des particules résistantes à l'usure (4).

12. Panneau selon la revendication 11, dans lequel le substrat (10) comprend une âme (11) contenant au moins l'un des éléments suivants : les fibres de bois, les fibres de cellulose, les fibres de chanvre, les fibres de coton, les fibres de plastique, un liant, la cellulose blanchie, la cellulose non blanchie, la pâte de bois mécanique blanchie, la pâte de bois mécanique non blanchie, et/ou les pigments.

13. Panneau selon la revendication 11 ou 12, comportant au moins un système de fixation (20) pour associer le panneau à au moins un autre panneau.
